# EUROPÄISCHE PATENTSCHRIFT

(11) **EP 0 437 860 B1**
(45) Veröffentlichungstag und Bekanntmachung des Hinweises auf die Patenterteilung: **23.02.1994**
(21) Anmeldenummer: 90125860.8
(22) Anmeldetag: 31.12.1990
(51) Int. Cl.: B01D 33/048, B01D 33/72, B01D 33/04

(54) **Schwerkraftbandfilter**
Gravity band filter
Filtre à bande de force de gravité

(43) Veröffentlichungstag der Anmeldung: 24.07.1991
(73) Patentinhaber: Wilkes, Kurt, D-88400 Biberach (DE)
(72) Erfinder: Wilkes, Kurt, D-88400 Biberach (DE)
(74) Vertreter: König, Beate, Dipl.-Phys. Dr.

(56) Entgegenhaltungen:
- EP-A- 0 251 787
- DE-A- 2 234 743
- DE-A- 2 725 645
- DE-A- 2 855 907
- DE-A- 3 409 826
- DE-A- 3 414 411
- DE-A- 3 740 992
- DE-A- 3 842 557
- DE-U- 7 218 709
- DE-U- 7 621 093
- GB-A- 2 134 404
- US-A- 4 108 778

## Beschreibung

Die Erfindung betrifft ein Schwerkraftbandfilter zum Filtern von Feststoffpartikel enthaltenden Flüssigkeiten durch ein Filterband, bei dem ein flüssigkeitsdurchlässiges Endlosband über Umlenkwalzen geführt angetrieben wird und zusammen mit zwei abgedichtet angeordneten, umlaufenden Seitenscheiben einen muldenförmigen Filtrierraum bildet, wobei eine Bandstützung vorgesehen ist, eine Zuleitung der Feststoffpartikel enthaltenden Flüssigkeit in den Filtrierraum vorgesehen ist, Mitnehmereinrichtungen vorgesehen sind, die das Austragen von Feststoffkuchen aus dem muldenförmigen Filtrierraum unterstützen, und unterhalb des Filtrierraums eine Auffangeinrichtung zum Sammeln und Abführen des Filtrats angeordnet ist.

Ein derartiges Schwerkraftbandfilter ist in der EP-A-0 155 466 beschrieben. Das Filterband liegt im Filtrierbereich an einem über Umlenkwalzen geführten angetriebenen endlosen Gitterstützband an und ist auf einer Kreisbogenbahn bei einem Winkel von mindestens 120° geführt, wobei die Rückführung des endlosen Gitterstützbandes durch den Ablaufbereich der gefilterten Flüssigkeit hindurch erfolgt. Für die Zuleitung der Feststoffpartikel enthaltenden Flüssigkeit in den Filtrierraum ist die den Seitenscheiben gemeinsame Lagerachse als mit mindestens einer Auslauföffnung versehene Hohlachse ausgebildet, über die die Zufuhr der Flüssigkeit in den Filtrierraum erfolgt. Zwischen den beiden Seitenscheiben sind Schmutzmitnehmerstege vorgesehen. Durch diese Maßnahmen soll es ermöglicht werden, mit möglichst hohem Flüssigkeitspegel und dementsprechend großem Flüssigkeitsdruck eine möglichst hohe Filterleistung zu erzielen.

Versuche haben gezeigt, daß bei einem Flüssigkeitspegel etwa in Höhe der Hohlachse die aus dieser ausströmende Flüssigkeit in der im Filterraum enthaltenen Flüssigkeit nicht verteilt wird. Es kommt bei diesem Filteraufbau zur Schaumbildung, wobei vor allem im Austragbereich eine stark beruhigte Zone vorliegt. Indessen läßt sich der feine Schaum insbesondere im Austragbereich schlecht abbauen. Daher wird der Schaum leicht von den Schmutzmitnehmerstegen mit ausgetragen.

Aus der DE-A-37 40 992 ist ein ähnlich aufgebautes Schwerkraftbandfilter bekannt, das ebenfalls eine Hohlachse für die Flüssigkeitszufuhr aufweist. Mitnehmerleisten für das Austragen von Filterkuchen aus dem Filtrierraum sind in die Abgabestellung über den Umfang der Seitenscheiben hinaus bewegbar, wobei dicht hinter der Abgabestellung ein Umlenkelement angeordnet ist, das die Mitnehmerleisten mit formschlüssigem Eingriff in die Pendelstellung zurückschwenkt.

In der DE-A-22 34 743 und DE-A-27 25 645 ist ein Schwerkraftbandfilter ebenfalls mit muldenförmigem Filtrierraum beschrieben, bei dem eine Zuleitung der Feststoffpartikel enthaltenden Flüssigkeit von oben in den Filtrierraum vorgesehen ist und sich das Zuleitungsrohr dabei in den Filtrierraum zwischen den beiden Seitenscheiben erstreckt. Es ist ein Flüssigkeitspegel bis zu etwa der Höhe der Achse der beiden Seitenscheiben vorgesehen. Die Anbringung von Mitnehmereinrichtungen zwischen den beiden Seitenscheiben wird nicht vorgeschlagen.

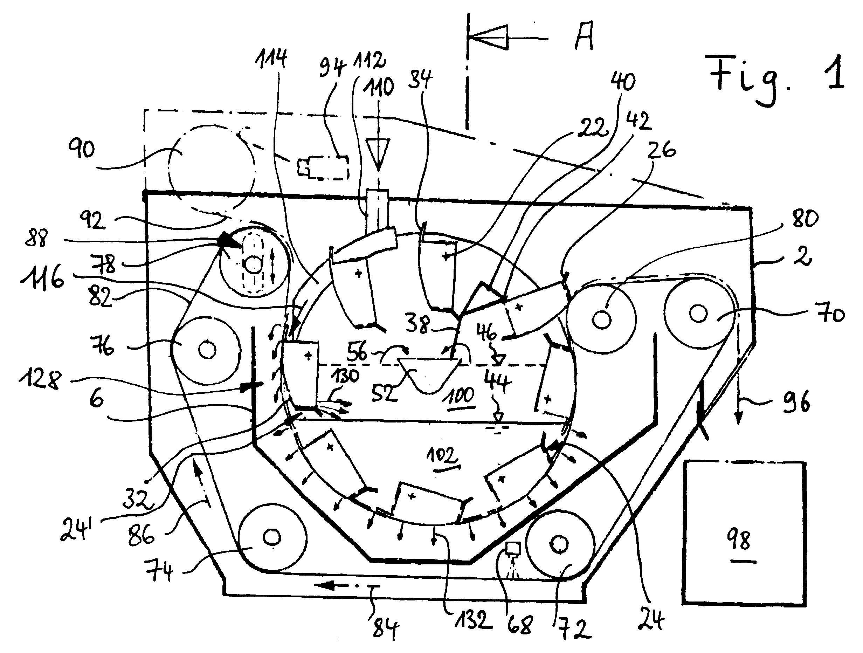

Ein Schwerkraftbandfilter gemäß der US-A-620 786 weist eine relativ flache Filtermulde und keine Mitnehmereinrichtungen auf. Die Umlenkwalzen sind in einer Höhe etwas unterhalb der Achsen der Seitenscheiben angeordnet. Als Zuleitung ist ein Ausflußrohr zwischen den Seitenscheiben und in der Nähe der von dem Austragbereich entfernter liegenden Umlenkwalze vorgesehen. Das Ausflußrohr ist so breit, daß es die Feststoffpartikel enthaltende Flüssigkeit quer über das Filterband verteilt. Jedoch befindet sich das untere Ende des Ausflußrohrs mit Abstand oberhalb des Filtrierraums. Daher kommt es infolge der relativ großen Fallhöhe zu einem Spritzen der ausströmenden Flüssigkeit und damit zu störender Verschmutzung des Filters selbst und der Umgebung. Hinzu kommt, daß der Ausflußbereich des Ausflußrohrs vertikal, d.h. gerade ausgebildet ist (vgl. Fig. 1). Dies hat starke Anströmkräfte im Auftreffbereich auf dem Filterband zur Folge, wodurch die Spritzwirkung verstärkt ist.

Aus der DE-A-35 39 419 ist ein Schwerkraftbandfilter bekannt, bei dem oberhalb eines Auffangbehälters und des Filterbandes ein Zulauf für die Feststoffpartikel enthaltende Flüssigkeit vorgesehen ist. Der Zulauf ist auf eine in der Filtermulde angeordnete Prallplatte gerichtet, die mit Abstand oberhalb des Filterbandes angeordnet ist. Die Prallplatte beginnt etwa in der Höhe des Behälters und folgt der Krümmung des Filterbandes bzw. der Filtermulde, wobei sie sich über etwa 1/4 des Scheibenumfangs erstreckt. Eine Sedimentation des Filterkuchens ist daher erst von der Mitte bis zur Austragseite der Filtermulde möglich, wodurch der beruhigte Sedimetationsbereich eingeschränkt ist. Außerdem ist der Beitrag der Zulaufseite der Filtermulde im Bereich der Prallplatte zur Filterwirkung entsprechend gering. Auch bei dieser Filterkonstruktion sind die Umlenkwalzen lediglich in Höhe der Achsen der Seitenscheiben vorgesehen.

Der Erfindung liegt die Aufgabe zugrunde, ein Schwerkraftbandfilter der eingangs genannten Art zu schaffen, das ein Filtern mit relativ hohem Flüssigkeitspegel ermöglicht, wobei die Schaumauflösung begünstigt wird und es insbesondere nicht zu einem Austrag von Schaum aus dem Filtrierraum kommt.

Diese Aufgabe ist bei einem Schwerkraftbandfilter mit den Merkmalen des Anspruchs 1 gelöst. Vorteilhafte Weiterbildungen des erfindungsgemäßen Schwerkraftbandfilters sind Gegenstand der abhängigen Ansprüche.

Erfindungsgemäß ist somit ein Schwerkraftbandfilter zum Filtern von Feststoffpartikel enthaltenden Flüssigkeiten durch ein Filterband vorgesehen, bei dem ein flüssigkeitsdurchlässiges Endlosband über Umlenkwalzen geführt angetrieben wird und zusammen mit zwei abgedichtet angeordneten, umlaufenden Seitenscheiben einen muldenförmigen Filtierrraum bildet, wobei die einlaufseitige Umlenkwalze mit ihrem gesamten Querschnitt in einer Höhe oberhalb der Achsen der Seitenscheiben angeordnet ist und eine Bandstützung vorgesehen ist. Es ist ferner eine Zuleitung der Feststoffpartikel enthaltenden Flüssigkeit in den Filtrierraum vorgesehen, deren Auslauf in bezug auf die Achsen der Seitenscheiben von der Austragseite des Filterbandes fort versetzt angeordnet ist. Der Auslauf der Zuleitung endet in einer Höhe oberhalb der Achsen der Seitenscheiben und unterhalb der einlaufseitigen Umlenkwalze im muldenförmigen Filtrierraum. Des weiteren endet die Zuleitung mit einer als Verteilerkasten ausgebildeten Verteilereinrichtung, die entsprechend der Muldenform gekrümmt ist und den Flüssigkeitsstrom in etwa tangential oder in spitzem Winkel zum Filterband mit axialem Gradienten in den Filtrierraum einleitet, wobei die Flüssigkeitseinleitung seitlich stärker als im mittleren Bereich ist. Das Schwerkraftbandfilter weist ferner leistenartige Mitnehmereinrichtungen auf, die das Austragen von Filterkuchen aus dem muldenförmigen Filtrierraum unterstützen. Unterhalb des Filtrierraums ist eine Auffangeinrichtung zum Sammeln und Abführen des Filtrats angeordnet.

Dadurch, daß die Zuleitung in bezug auf die Seitenscheibenachsen versetzt und oberhalb von diesen angeordnet ist, kann der Flüssigkeitspegel im Zylinderraum über die Mittelachse bis zu etwa anderthalb Seitenscheibenradien bei entsprechend großem Führungswinkelbereich des Endlosbandes, d.h. z.B. bis zu etwa 200°, angehoben werden. Die Erhöhung des Flüssigkeitspegels führt zu einer höheren Filterleistung. Bei der erfindungsgemäßen Zuleitung der Flüssigkeit wird außerdem das Filterband z.T. von dieser direkt angeströmt. Oberhalb des Flüssigkeitspegels kommt es daher zu einer direkten Filterung ohne Gebrauch der Filtermulde.

Untersuchungen haben gezeigt, daß es zwar bei dem erfindungsgemäßen Schwerkraftbandfilter zur Schaumbildung kommen kann. Diese Schaumbildung ist geringer als bei einer Zuführung der Feststoffpartikel enthaltenden Flüssigkeit durch eine Hohlachse. Bei dem erfindungsgemäßen Schwerkraftbandfilter wird der bereits in geringer Menge erzeugte Schaum verstärkt abgebaut, so daß insgesamt im Vergleich zu einem Schwerkraftbandfilter mit einer Zuleitung durch eine Hohlachse weniger Schaum im Filtrierraum vorhanden ist und es insbesondere nicht zu einem Austrag von Schaum aus dem Filtrierraum kommt.

Durch die Anordnung des Zuleitungsendes entgegengesetzt zur Austragseite des Filterbandes, d.h. im Bereich des Filterbandes, bei dem die Sedimentation der Feststoffpartikel beginnt, wird sichergestellt, daß der Filterkuchen im eigentlichen Filtrierbereich durch den Flüssigkeitseinlauf nicht beeinträchtigt ist. Vielmehr ist bereits im Bereich, in dem die Mitnehmereinrichtungen mit dem Filterkuchen in Eingriff treten, eine ruhige Zone vorhanden.

Für den Flüssigkeitskeitseinlauf ist eine Verteilereinrichtung vorgesehen, in der die Zuleitung endet und die zweckmäßig den in den Filtrierraum einzuleitenden Flüssigkeitsstrom, d.h. den Flüssigkeitszulauf, über im wesentlichen die gesamte Filterbreite verteilt. Auf diese Weise sind die Strömungs- und Druckverhältnisse im Sedimentations- bzw. Filtrierbereich gleichmäßig bzw. kontrollierbar und gute Filtriereigenschaften ermöglicht.

Die Verteilereinrichtung ist mit einem entsprechend der Muldenform gekrümmt ausgebildeten Verteilerkasten versehen. Hierdurch ergeben sich besonders günstige Strömungsverhältnisse. Außerdem ist die Verteilereinrichtung so ausgebildet, daß sie den in den Filtrierraum einzuleitenden Flüssigkeitsstrom mit axialem Gradienten einleitet, wobei die Flüssigkeitseinleitung seitlich stärker als im mittleren Bereich ist. Dies führt zu einer zirkulierenden Strömung der Flüssigkeit im Filtrierraum. Je nach der Stellung der Mitnehmereinrichtungen entsprechend der Scheibendrehung erfolgt eine unterschiedliche Ablenkung des Flüssigkeitsstroms an den Mitnehmereinrichtungen. Dabei kommt es entsprechend durch die Formgebung der Mitnehmereinrichtungen zu einer flachen Ablenkung des Flüssigkeitsstroms in flachem Winkel zur Flüssigkeitsoberfläche. Hierdurch ist die Zirkulation der Strömung im Bereich der Flüssigkeitsoberfläche verstärkt.

Insbesondere durch die zirkulierende Strömung wird eine Schaumauflösung herbeigeführt. Beim Einströmen in den Filtrierraum gebildeter und gewöhnlich verhältnismäßig grober Schaum wird mit der Strömung mitgeführt und bei Erreichen des mittleren axialen Bereichs durch dort von oben aufprallende Flüssigkeit zerschlagen. Der Schaum ist ferner stets in Bewegung und ändert dabei fortwährend die Bewegungsrichtung, wodurch es zu weiterer Schaumauflösung kommt.

Da die zirkulierende Strömung nur im oberflächennahen Bereich der Flüssigkeit vorhanden ist, treten keine Störungen im Sedimentationsbereich auf. Der Schaumauflösungseffekt ist durchsatzunabhängig, d.h. er tritt bei kleinem und auch bei großem Flüssigkeitsdurchsatz auf.

Die Verteilereinrichtung ist vorzugsweise als Verteilerkasten mit einer Leit- und Umlenkeinrichtung für den in den Filtrierraum einzuleitenden Flüssigkeitsstrom ausgebildet. Auf diese Weise kann die Flüssigkeit dem Filtrierbereich besonders gezielt zugeführt werden, und es ist sogar möglich, den Flüssigkeitsstrom zur Reinigung der Mitnehmereinrichtungen einzusetzen.

Die beschriebenen Einströmverhältnisse lassen sich auf einfache Weise realisieren, indem beispielsweise ein Zuleitungsrohr so angeordnet wird, daß es etwa im axial mittleren Bereich von oben in die Verteilereinrichtung gegenüber einer schräg nach unten geneigten Platte mit seitlichen Begrenzungen und vor einer Leiteinheit mündet. Die Einströmung auf die Platte von oben und auf die Leiteinheit, verbunden mit dem Abprallen an der seitlichen Begrenzung führen zu einer Verstärkung des Flüssigkeitsstroms im seitlichen Bereich.

Vorzugsweise endet der Auslauf der Verteilereinrichtung in der Nähe des Filterbandes, wobei der Flüssigkeitsstrom in etwa tangential zum Filterband in den Filtrierraum eingeleitet wird. "Tangential" soll hier in weiterer Bedeutung insbesondere als Gegensatz zu "radial" verstanden werden. Eine vollkommen radiale Anströmung des Filterbandes könnte zu einer Filterminderung führen. Das Vorsehen einer in etwa tangentialen oder in spitzem Winkel erfolgenden Anströmung bewirkt somit, daß eine Filterminderung verhindert wird.

Ein weiterer Vorteil dieser Ausgestaltung der Verteilereinrichtung ist, daß sie ein Spülen der von der Flüssigkeit angeströmten Mitnehmereinrichtungen ermöglicht. Auf diese Weise kann jegliche Gefahr einer Beschädigung des Filterbandes durch etwa noch an den Mitnehmereinrichtungen haften gebliebene Feststoff- bzw. Schmutzpartikel behoben werden.

Bei einem Ausführungsbeispiel des erfindungsgemäßen Schwerkraftbandfilters befindet sich ein Überlauf im Filtrierraum in einer Höhe oberhalb der Achsen der Seitenscheiben, der die Flüssigkeit z.B. durch eine Öffnung in einer Seitenscheibe in eine für ungefilterte Flüssigkeit vorgesehene Kammer ableitet. Hierzu kann zweckmäßig vorgesehen sein, daß zumindest eine der Achsen der Seitenscheiben als Hohlachse ausgebildet ist und der Überlauf ein in die Hohlachse mündendes Überlaufrohr umfaßt. Ein Überlaufen ungefilterter Flüssigkeit aus dem Filtrierraum in die Reinflüssigkeitszone kann so auch bei Ausfall eines Schwimmerschalters, des Bandantriebs oder dgl. völlig ausgeschlossen werden, wodurch eine besonders gute Funktionssicherheit des Filtersystems sichergestellt ist.

Unterhalb des Filtrierraums ist vorteilhaft ein Behälter als Auffangeinrichtung für das Filtrat angeordnet. Das Filtrat strömt dann nicht durch das Untertrum des Endlosbandes, sondern aus dem Behälter über eine Rinne zwischen Ober- und Untertrum seitlich ab, wodurch ein eventuelles Verschmutzen des Endlosbandes vermieden wird. Im Filtermittel oder Trägergurt sich absetzender Feinschmutz kann so nicht in den Reinbereich gelangen, denn durch das Untertrum fließt keine gefilterte Flüssigkeit in den Reinbehälter.

Das Endlosband kann zusätzlich als Stützband vorgesehen sein, auf dem ein Filterband aus filterfähigem Material anliegt und mitgeführt ist, wobei zusätzlich noch ein Trägerband bzw. Gurt vorgesehen sein kann.

Das Endlosband ist vorzugsweise ein flexibles, zugfestes poröses Filterband aus einem korrosionsfesten Werkstoff, insbesondere Edelstahl, Kunststoff oder einem alternativen, für die Anforderungen geeigneten Werkstoff. Ein derartiges Filterband hat eine große Filterfeinheit mit z.B. 55 µm garantiertem Trockenausgangswert, wobei bis unter 25 µm gefiltert werden kann. Es kann ohne Träger- oder Stützband eingesetzt werden, da es zugleich Träger- und Filterband ist.

Bei der erfindungsgemäßen Ausführungsform eines Schwerkraftbandfilters mit Endlosfilterband kann vorteilhaft eine Umlenkwalze für das Endlosband als Bandantrieb vorgesehen sein. Mittels eines derartigen Walzenantriebes wird über die gesamte Breite angetrieben, wobei die Krafteinleitung ins Filterband sehr viel wirksamer als bei einem Antrieb über die Seitenscheiben ist. Es muß weniger Vorspannung auf das Endlosband aufgebracht werden und auf diese Weise wird Standzeit gewonnen.

Vorteilhaft wird als Antriebswalze eine nicht direkt am Filtrierraum befindliche Umlenkwalze vorgesehen, wobei die direkt am Filtrierraum angeordneten Walzen lediglich eine Führungsfunktion betreffend das Filterband innehaben. Die für den Bandantrieb vorgesehene Umlenkwalze erhält vorzugsweise eine Beschichtung mit größerem Reibungskoeffizienten als demjenigen der anderen Umlenkwalzen.

Die leistenartigen Mitnehmereinrichtungen sind vorteilhaft um ihre Achse verschwenkbar, z.B. wie in der WO-A-8 905 183 beschrieben. Derartige Mitnehmerleisten eignen sich besonders gut für den Einsatz in einem verhältnismäßig hohen und steilwandigen Filtrierraum, wie er beim erfindungsgemäßen Schwerkraftbandfilter vorgesehen sein kann. Die Mitnehmerleisten sind so ausgeformt, daß sie am Filtermittel von Muldenbeginn bis zur Höhe der Bandabwinklung in die schräge Richtung Kuchenaustrag bzw. Schlammabwurf selbsthaltend anliegen.

Zweckmäßig sind die Mitnehmerleisten jeweils mit einer Schubleiste versehen, die den von der betreffenden Mitnehmerleiste aufgenommenen Filterkuchen zunächst gegen Störungen wie z.B. Strömungen von oben abschirmt, wodurch eine gute Sedimentbildung unterstützt wird. Beim Weitertransport bzw. Vorschub stützt die Schubleiste ferner den Filterkuchen ab.

Bei einer bevorzugten Ausführungsform weisen die Mitnehmerleisten seitliche Begrenzungen auf. Diese stellen eine seitliche Führung für den aufgenommenen Filterkuchen dar und verhindern ein seitliches Herunterrutschen, so daß keine Feststoffpartikel über diesen Weg in den Reinbereich gelangen können und es auch zu keiner störenden Ablagerung in dem Austrag benachbarten Bereichen des Filters kommt.

Insbesondere für die Ausführung des erfindungsgemäßen Schwerkraftbandfilters mit Endlosfilterband sind die Mitnehmerleisten zusätzlich jeweils mit einem Stützsteg versehen. Ein solcher Stützsteg befindet sich auf der dem Abdecksteg gegenüberliegenden Seite und erstreckt sich in die entgegengesetzte Richtung, wobei er im wesentlichen zur Anlage an das Endlosband gelangt und dieses gegen Durchhängen oder dgl. abstützt, d.h. ihm die erforderliche Stabilität in Querrichtung verleiht.

Vorteilhaft ist der Stützsteg entsprechend der Muldenform gekrümmt ausgebildet. Hierdurch kommt es zu einer besonders guten Abstützung und die Gefahr von Bandbeschädigungen durch Stegkanten oder dgl. ist ausgeschlossen.

Eine besonders gute Stützwirkung ergibt sich durch Vorsehen von Stützlaschen auf der dem Abdecksteg gegenüberliegenden Seite, die zweckmäßig im Endbereich an den Mitnehmerleisten angebracht und entsprechend der Muldenform geformt sind. Bevorzugt ist die Anbringung von Stützlaschen in beiden Richtungen, wodurch sich ein großer Stützbereich für die einzelne Mitnehmerleiste ergibt.

Die Erfindung wird im folgenden weiter anhand eines bevorzugten Ausführungsbeispiels und der Zeichnung beschrieben. In der Zeichnung zeigen:
- Fig. 1: eine schematische Querschnittsansicht eines erfindungsgemäßen Schwerkraftbandfilters,
- Fig. 2: eine Längsschnittansicht des Schwerkraftbandfilters von Fig. 1 gemäß Pfeil A,
- Fig. 3: eine schematische Draufsicht des Schwerkraftbandfilters gemäß Linie B-B in Fig. 2,
- Fig. 4: eine schematische perspektivische Ansicht eines in Fig. 1 dargestellten Verteilerkastens und
- Fig. 5: eine perspektivische Ansicht einer bei dem Schwerkraftbandfilter von Fig. 1 verwendeten Mitnehmerleiste.

Es wird im folgenden insbesondere unter Bezugnahme auf Fig. 1 ein Ausführungsbeispiel des erfindungsgemäßen Schwerkraftbandfilters beschrieben. Das Schwerkraftbandfilter umfaßt ein Gehäuse 2. Im unteren Bereich des Gehäuses 2 befindet sich eine als Behälter dienende Wanne 6, die dicht oberhalb ihres Bodens 8 mit einem seitlichen, rechtwinklig nach unten abgebogenen Auslaufstutzen 10 versehen ist. Zwei koaxiale Seitenscheiben 18, 20 sind drehbar gelagert und tragen auf der Innenseite nahe dem Außenumfang angebrachte Stäbe oder Halterungsbolzen 22.

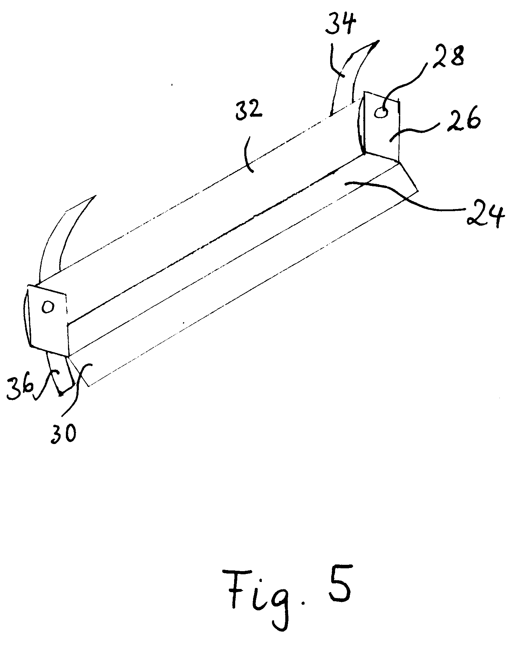

Auf den Stäben 22 sind in Fig. 5 mehr im einzelnen dargestellte Mitnehmerleisten 24, die sich über im wesentlichen die gesamte Filterbreite erstrecken, mittels Haltelaschen 26 drehbar gelagert. Die Haltelaschen 26 sind am Ende der Mitnehmerleisten jeweils rechtwinklig angeordnet und mit einer Bohrung 28 zur Aufnahme des betreffenden Stabes 22 versehen. Auf der Seite in Förderrichtung weisen die Mitnehmerleisten 24 mit stumpfem Winkel angeordnete Schubleisten 30 auf. Auf der anderen Seite tragen die Mitnehmerleisten 24 jeweils einen Stützsteg 32, der sich entgegengesetzt zur betreffenden Schubleiste 30 erstreckt und entsprechend der Muldenform gekrümmt ausgebildet ist. Mittels dieses Stützsteges 32 gelangen die Mitnehmerleisten 24 etwa ab Vorbeilaufen an einem später noch beschriebenen Verteilerkasten 114 zur Anlage an ein ebenfalls später noch beschriebenes Endlosfilterband 82 und stützen dieses von unten ab. Nahe der seitlichen Enden weisen die Stützstege 32 zusätzlich jeweils eine Stützlasche 34, 36 auf, die ebenfalls entsprechend der Muldenform gekrümmt ausgebildet ist und wie die Stützstege zur Anlage an das Endlosfilterband 82 gelangt.

Oberhalb der halben Radiushöhe befindet sich etwas innerhalb des die Mitnehmerleisten verbindenden Kreisbogens ein an einem Stab 38 angebrachtes Umlenkelement 40, das bei Drehung der Seitenscheiben 18, 20 und damit der Mitnehmerleisten 24 mit der bei Heraufbewegung der Mitnehmerleisten 24 radial inneren Oberkante 42 der Mitnehmerleisten 24 in Eingriff tritt und hierbei eine Verschwenkung der Mitnehmerleisten im Gegenuhrzeigersinn bewirkt.

Es ist ferner ein nicht dargestellter Schwimmerschalter zur Regelung des Füllstandes (Symbol 44) von Flüssigkeit 102 im Filtrierraum 100 vorgesehen. Bei diesem verhältnismäßig niedrigen Füllstand kommt es zu keiner störenden Schaumbildung, wie später noch erläutert wird. Das Symbol 46 in Fig. 1 veranschaulicht den für das veranschaulichte Ausführungsbeispiel in etwa maximalen Füllstand. Z.B. durch Hochlegen der Umlenkwalzen 78, 80 kann dieser weiter erhöht werden.

Ein halboffenes Rohr 52 ist als Überlauf vorgesehen und mündet in eine Leitung 54, die sich als Hohlachse durch die Seitenscheibe 18 erstreckt und die Flüssigkeit fortführt. Pfeile 56 veranschaulichen das Einströmen von Flüssigkeit in das Rohr 52. Wenn mit höherem Flüssigkeitspegel gearbeitet wird, wird das halboffene Rohr 52 durch ein Überlaufrohr ersetzt, das nach oben in die gewünschte Höhe entsprechend dem maximal zugelassenen Flüssigkeitspegel führt.

Aus Fig. 1 sind sechs Umlenkwalzen 70, 72, 74, 76, 78, 80 ersichtlich, um die ein flüssigkeitsdurchlässiges Endlosfilterband 82 geführt ist. Die in Fig. 1 oberste und einlaufseitige Umlenkwalze 78 ist mit einer in bekannter Weise arbeitenden Einrichtung (vgl. 88) zur automatischen Höheneinstellung ausgestattet, die den Einlauf des Endlosbandes in den Filtrierraum steuert. Eine nicht dargestellte Antriebs- und Steuereinheit dient zum Antreiben des Endlosfilterbandes 82, das sich im gezeigten Ausführungsbeispiel im Uhrzeigersinn (vgl. Pfeile 84, 86) dreht. Der Antrieb erfolgt in bekannter Weise abhängig vom Pegel der Flüssigkeit gesteuert durch den Schwimmerschalter oder durch eine Zeitschaltung mit maschinenabhängiger Steuerung. Das Endlosfilterband 82 ist im dargestellten Ausführungsbeispiel aus einem metallischen korrosionsfesten Gittergeflecht bzw. -gewebe vorzugsweise aus Edelstahl und wird beim Rücklauf unterhalb der Wanne 6 durch eine Reinigungsvorrichtung 68 in bekannter Weise gereinigt. Das Endlosfilterband 82 dient gleichzeitig als Filter- und Trägerband. Es befindet sich mit den Seitenscheiben 18, 20 abdichtend in Eingriff, wodurch ein muldenförmiger Filtrierraum 100 gebildet wird.

Alternativ kann statt des Endlosfilterbandes auch ein Stützband mit Kettenantrieb und ggf. zusätzlichem Trägerband als Auflage für von einer sich im Gegenuhrzeigersinn drehenden Rolle 90 abgezogenes Filterband 92 vorgesehen werden, wie in Fig. 1 gestrichelt veranschaulicht ist. Der Füllgrad der Rolle 90 mit Filterband wird mittels eines im dargestellten Beispiel optischen Sensors 94 überwacht. Das Filterband 92, das z.B. aus Vlies ist, läuft mit dem Endlosband 82 über die Umlenkwalze 78 bis über die Umlenkwalze 70 mit. Ab der Umlenkwalze 70 wird das Filterband 92 aufgrund seines Eigengewichts (vgl. Pfeil 96) in einem Aufnahmebehälter 98 zur Entsorgung gesammelt oder durch nicht aufgeführte Abstreifer vom Schmutz getrennt und über eine nicht dargestellte Vlieshaspel aufgewickelt.

Oberhalb des durch die Seitenscheiben 18, 20 und die Stäbe 22 gebildeten Zylinderraums erstreckt sich eine Zuleitung zum Zuführen von Feststoffpartikel enthaltender Flüssigkeit (vgl. Pfeil 110). Die Zuleitung endet in einem senkrecht angeordneten Einlaufstutzen 112, der oben etwa mittig in einen sich über im wesentlichen die gesamte Filterbreite erstreckenden Verteilerkasten 114 mündet. Der Verteilerkasten 114 ist entsprechend der Muldenform gekrümmt ausgebildet und erstreckt sich bei dem veranschaulichten Ausführungsbeispiel über etwa 1/8-Kreisbogen. Am vorderen Ende ist der Verteilerkasten 114 mit vertikaler Fluchtung offen und im übrigen geschlossen. Die Strömungsrichtung der den Verteilerkasten durchströmenden Flüssigkeit ist durch einen Pfeil 116 veranschaulicht.

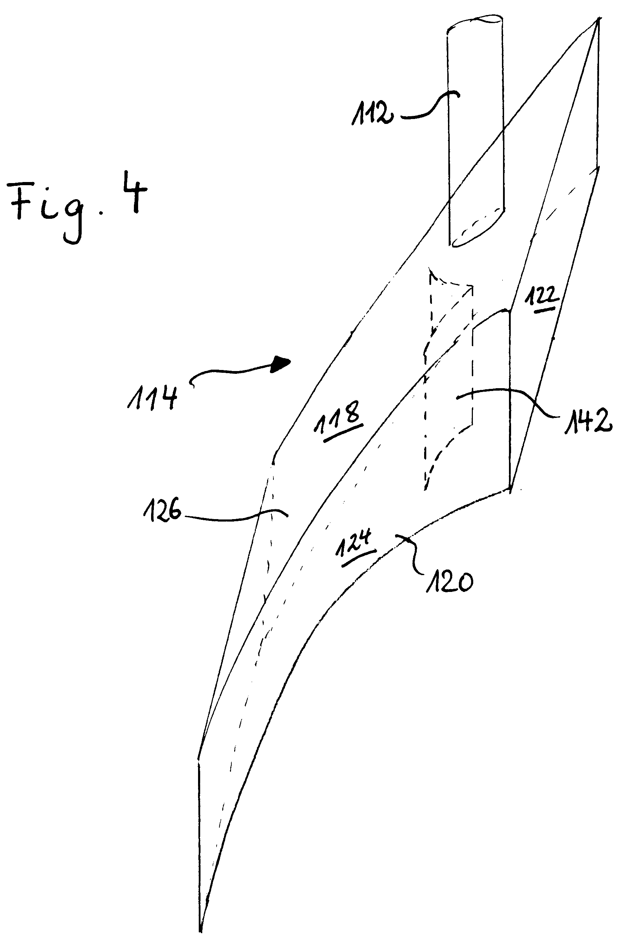

Der in Fig. 4 mehr im einzelnen dargestellte Verteilerkasten 114 ist mit einer gekrümmten oberen und unteren Platte 118, 120, einer hinteren Platte 122 und zwei Seitenplatten 124, 126 sowie mit einer Leit- und Umlenkeinrichtung in Form einer auf der unteren Platte 120 angebrachten Leiteinheit 142 bzw. Leitschikane versehen, die den durch den Einlaufstutzen zugeführten Flüssigkeitsstrom in Richtung des bereits erwähnten Pfeils 116 und stärker in die seitliche Richtung lenkt. Die Flüssigkeit strömt das Filterband 82 im wesentlichen tangential an. Ein Teil der Flüssigkeit tritt zwischen dem Auslaufende des Verteilerkastens 114 und dem Flüssigkeitspegel durch das Filterband 92 (vgl. Pfeile 128) in die Wanne 6 und wird auf diese Weise nicht durch die Filtermulde gefiltert. Die übrige Flüssigkeit strömt nach unten direkt auf die nächstliegende Mitnehmerleiste, d.h. in Fig. 1 auf die Mitnehmerleiste 24'. Der Flüssigkeitsstrom läuft dann beim Einlaufen entlang der Mitnehmerleiste 24' und wäscht diese sauber, wodurch deren Funktion optimiert ist. Die einströmende Flüssigkeit gelangt bei der dargestellten Position der Mitnehmerleiste 24' in relativ flachem Winkel auf die Flüssigkeit 102 im Filtrierraum 100, wie Pfeile 130 veranschaulichen. Im übrigen strömt die Flüssigkeit bei dem dargestellten Schwerkraftbandfilter in dem Einlaufbereich des Endlosbandes in den Filtrierraum, wo erst die Sedimentation, d.h. Filterkuchenbildung, beginnt. Dies bewirkt, daß der Filterkuchenaufbau und bereits aufgebaute Filterkuchen im Filtrier- und Austragbereich durch einströmende Flüssigkeit nicht gestört werden. Das Ausströmen des Filtrats aus dem Filtrierraum 100 in die Wanne 6 ist durch Pfeile 132 veranschaulicht.

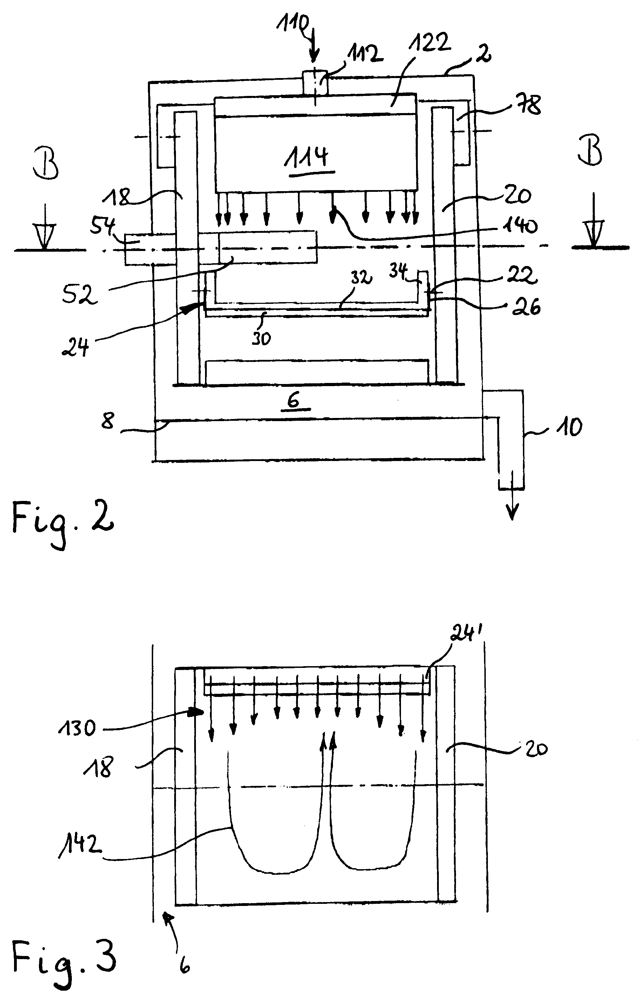

Die sich ergebenden Strömungsverhältnisse im Bereich des Verteilerkastens 114 und in der Flüssigkeit im Filtrierraum 100 sind in Fig. 2 und 3 veranschaulicht. Durch das Aufprallen der einströmenden Flüssigkeit auf der unteren Platte 120 wird der größte Teil seitlich in Richtung der Seitenplatten 124, 126 abgelenkt und strömt entlang dieser nach unten. Die über die Filterbreite unterschiedliche Flüssigkeitsmenge ist durch Pfeile 140 veranschaulicht, die zur Seite hin jeweils dichter eingezeichnet sind. Entsprechend stärker ist die in den Filtrierraum 100 eintretende Strömung im seitlichen in bezug auf den mittleren Bereich. Dies führt zu einem Zirkulieren der Flüssigkeit im oberflächennahen Bereich, und zwar strömt die Flüssigkeit in Fig. 3 seitlich von hinten nach vorne und dann in der Mitte wieder zurück in Richtung des Verteilerkastens 114 (vgl. Pfeile 142). Durch diese zirkulierende Strömung wird etwa gebildeter Schaum aufgelöst bzw. im mittleren Bereich durch dort von oben einströmende Flüssigkeit zerschlagen.

Im dargestellten Ausführungsbeispiel ist der Füllstand, d.h. der Pegel der Flüssigkeit 102, lediglich etwa bis in halbe Radiushöhe der Seitenscheiben 118, 120 dargestellt. In der Praxis kann der Flüssigkeitspegel jeweils entsprechend der Anordnung der in unterschiedlicher Höhe anordenbaren Umlenkwalzen 78 und 80 bis etwa zum Auslauf des Verteilerkastens 114 angehoben werden, wodurch die Filterleistung gesteigert werden kann.

In bekannter Weise unterstützen die Mitnehmerleisten 24 den Austrag des mit dem Filterband 92 entsprechend dem intermittierenden Antrieb des Endlosbandes 82 ausgetragenen Filterkuchens. Die Schubleisten 30 unterstützen wie erwähnt den Transport des Filterkuchens insbesondere bei höher gelegter Austraghöhe. Sie verhindern ein Herunterrutschen des Filterkuchens von den Mitnehmerleisten 24 und erleichern das Überführen auf den horizontalen Bereich des Filterbandes 92 bei der Umlenkwalze 80. Weiterhin vorteilhaft ermöglichen die Schubleisten 30 eine frühe Aufnahme von Filterkuchen durch die Mitnehmerleisten 24 und schützen diesen gegen eventuelle Störungen in der Flüssigkeit 102 von oben.

Durch den Filterkuchen hindurch gefilterte Flüssigkeit, d.h. das Filtrat, strömt in die Wanne 6 und wird dort gesammelt, wie durch die Pfeile 128, 132 veranschaulicht ist. Durch den Auslaufstutzen 10 wird das Filtrat abgeführt. In der Wanne 6 ggf. noch aufgefangene Feststoffpartikel können bedarfsweise vom Boden 8 abgeräumt werden.

## Patentansprüche

1. Schwerkraftbandfilter zum Filtern von Feststoffpartikel enthaltenden Flüssigkeiten durch ein Filterband (82), bei dem
- ein flüssigkeitsdurchlässiges Endlosband (82) über Umlenkwalzen (78, 80) geführt angetrieben wird und zusammen mit zwei abgedichtet angeordneten, umlaufenden Seitenscheiben (18, 20) einen muldenförmigen Filtrierraum (100) bildet, wobei eine Bandstützung vorgesehen ist,
- wobei die einlaufseitige Umlenkwalze (78) mit ihrem gesamten Querschnitt in einer Höhe oberhalb der Achsen der Seitenscheiben (18, 20) angeordnet ist,
- eine Zuleitung (110, 112, 114) der Feststoffpartikel enthaltenden Flüssigkeit in den Filtrierraum (100) vorgesehen ist, deren Auslauf in bezug auf die Achsen der Seitenscheiben (18, 20) von der Austragseite des Filterbandes (82) fort versetzt angeordnet ist,
- wobei der Auslauf der Zuleitung (110, 112, 114) in einer Höhe oberhalb der Achsen der Seitenscheiben (18, 20) und unterhalb der einlaufseitigen Umlenkwalze (78) im muldenförmigen Filtrierraum (100) endet,
- wobei die Zuleitung (110, 112, 114) mit einer als Verteilerkasten ausgebildeten Verteilereinrichtung (114) endet, die entsprechend der Muldenform gekrümmt ist und den Flüssigkeitsstrom in etwa tangential oder in spitzem Winkel zum Filterband mit axialem Gradienten in den Filtrierraum einleitet, wobei die Flüssigkeitseinleitung seitlich stärker als im mittleren Bereich ist,
- leistenartige Mitnehmereinrichtungen (24) vorgesehen sind, die das Austragen von Filterkuchen aus dem muldenförmigen Filtrierraum unterstützen, und
- unterhalb des Filtrierraums eine Auffangeinrichtung (6) zum Sammeln und Abführen des Filtrats angeordnet ist.

2. Schwerkraftbandfilter nach Anspruch 1, dadurch **gekennzeichnet**, daß der Auslauf der Verteilereinrichtung (114) den in den Filtrierraum (100) einzuleitenden Flüssigkeitsstrom über im wesentlichen die gesamte Filterbreite verteilt.

3. Schwerkraftbandfilter nach Anspruch 1 oder 2, dadurch **gekennzeichnet**, daß die Verteilereinrichtung (114) mit einer Leit- und Umlenkeinrichtung für den in den Filtrierraum (100) einzuleitenden Flüssigkeitsstrom ausgebildet ist.

4. Schwerkraftbandfilter nach einem der Ansprüche 1 bis 3, dadurch **gekennzeichnet**, daß ein Zulaufrohr (112) etwa im axial mittleren Bereich von oben in die Verteilereinrichtung (114) gegenüber einer schräg nach unten geneigten Platte (120) mit seitlichen Begrenzungen (124, 126) und vor einer Leiteinheit (142) mündet.

5. Schwerkraftbandfilter nach Anspruch 3 oder 4, dadurch **gekennzeichnet**, daß der Auslauf der Verteilereinrichtung (114) in der Nähe des Filterbandes (82) endet.

6. Schwerkraftbandfilter nach einem der Ansprüche 1 bis 5, dadurch **gekennzeichnet**, daß ein Überlauf (52, 54) im Filtrierraum in einer Höhe oberhalb der Achsen der Seitenscheiben (18, 20) vorgesehen ist.

7. Schwerkraftbandfilter nach Anspruch 6, dadurch **gekennzeichnet**, daß zumindest eine der Achsen der Seitenscheiben (18, 20) als Hohlachse (54) ausgebildet ist und der Überlauf ein in die Hohlachse mündendes Überlaufrohr (52) umfaßt.

8. Schwerkraftbandfilter nach einem der Ansprüche 1 bis 7, dadurch **gekennzeichnet**, daß unterhalb des Filtrierraums (100) ein Behälter (6) als Auffangeinrichtung für das Filtrat angeordnet ist.

9. Schwerkraftbandfilter nach einem der Ansprüche 1 bis 8, dadurch **gekennzeichnet**, daß das Endlosband (82) über einen Winkel von bis zu 200° geführt ist.

10. Schwerkraftbandfilter nach einem der Ansprüche 1 bis 9, dadurch **gekennzeichnet**, daß das Endlosband (82) zusätzlich als Stützband vorgesehen ist, auf dem ein Filterband (92) anliegt und mitgeführt wird.

11. Schwerkraftbandfilter nach einem der Ansprüche 1 bis 10, dadurch **gekennzeichnet**, daß das Endlosband ein flexibles, zugfestes poröses Filterband aus einem korrosionsfesten Werkstoff aufweist.

12. Schwerkraftbandfilter nach Anspruch 11, dadurch **gekennzeichnet**, daß das Endlosband aus Edelstahl, Kunststoff oder einem alternativen Werkstoff ist.

13. Schwerkraftbandfilter nach Anspruch 11 oder 12, dadurch **gekennzeichnet**, daß eine Umlenkwalze für das Endlosband als Bandantrieb ausgebildet ist.

14. Schwerkraftbandfilter nach Anspruch 13, dadurch **gekennzeichnet**, daß die für den Bandantrieb vorgesehene Umlenkwalze eine Beschichtung mit größerem Reibungskoeffizienten als demjenigen der anderen Umlenkwalzen aufweist.

15. Schwerkraftbandfilter nach einem der Ansprüche 1 bis 14, dadurch **gekennzeichnet**, daß die Mitnehmerleisten (24) um ihre Achse verschwenkbar und insbesondere mit einer Schubleiste (30) versehen sind.

16. Schwerkraftbandfilter nach Anspruch 15, dadurch **gekennzeichnet**, daß die Mitnehmerleisten (24) seitliche Begrenzungen (26) aufweisen.

17. Schwerkraftbandfilter nach Anspruch 15 oder 16, dadurch **gekennzeichnet**, daß die Mitnehmerleisten (24) einen Stützsteg (32) aufweisen.

18. Schwerkraftbandfilter nach Anspruch 17, dadurch **gekennzeichnet**, daß der Stützsteg (32) entsprechend der Muldenform gekrümmt ausgebildet ist.

19. Schwerkraftbandfilter nach einem der Ansprüche 15 bis 18, dadurch **gekennzeichnet**, daß die Mitnehmerleisten im Bereich ihrer axialen Enden jeweils mit einer oder zwei sich in entgegengesetzte Richtungen erstreckenden Stützlaschen (34, 36) versehen sind, die entsprechend der Muldenform gekrümmt ausgebildet sind.

## Claims

1. Gravity band filter for the filtration of liquids containing solid particles by means of a filter band (82), in which
- a liquid-permeable endless band (82) is guidedly driven around deflection rollers (78, 80) and, together with two rotatable side plates (18, 20) in sealed engagement therewith, defines a trough-like filtration chamber (100), and with support for the band being provided,
- the inlet-side deflection roller (78) is arranged with its complete cross-section at a level above the axes of the side plates (18, 20),
- a feeder (110, 112, 114) for the liquid containing solid particles into the filtration chamber (100) is provided, whose outlet is arranged shifted away from the discharge side of the filter band (82) in relation to the axes of the side plates (18, 20),
- wherein the outlet of the feeder (110, 112, 114) terminates in the trough-like filtration chamber (100) at a level above the axes of the side plates (18, 20) and below the inlet-side deflection roller (78),
- wherein the feeder (110, 112, 114) terminates with a distribution device (114) formed as a distribution box, which is curved to correspond to the shape of the trough and introduces the liquid flow into the filtration chamber approximately tangentially to or at a sharp angle to the filter band with axial gradients, wherein the introduced liquid flow is stronger at the sides than in the central region,
- strip-like entraining devices (24) are provided which support the delivery of filter cake from the trough-shaped filtration chamber, and
- below the filtration chamber is arranged a collection device (6) for collecting and taking away the filtrate.

2. Gravity band filter according to claim 1, characterised in that the outlet of the distribution device (114) spreads the flow of liquid flowing into the filtration chamber (100) over substantially the whole width of the filter.

3. Gravity band filter according to claim 1 or 2, characterised in that the distribution device (114) is formed with a baffle and deflection device for the flow of liquid entering into the filtration chamber (100).

4. Gravity band filter according to one of claims 1 to 3, characterised in that a feed pipe (112) issues approximately into the axial central region of the distribution device (114) from above, in front of a baffle unit (142), and opposite a downwardly inclined sloping plate (120) having lateral boundaries (124, 126).

5. Gravity band filter according to claim 3 or 4, characterised in that the outlet of the distribution device (114) terminates adjacent to the filter band (82).

6. Gravity band filter according to one of claims 1 to 5, characterised in that an overflow (52, 54) is provided in the filtration chamber at a level which is above the axes of the side plates (18, 20).

7. Gravity band filter according to claim 6, characterised in that at least one of the axes of the side plates (18, 20) is formed as a hollow shaft (54) and the overflow includes an overflow pipe (52) which issues into the hollow shaft.

8. Gravity band filter according to one of claims 1 to 7, characterised in that below the filtration chamber (100) there is provided a container (6) as a receiving device for the filtrate.

9. Gravity band filter according to one of claims 1 to 8, characterised in that the endless band (82) is guided through an angle of up to 200°.

10. Gravity band filter according to one of claims 1 to 9, characterised in that the endless band (82) is additionally a support band on which a filter band (92) lies and is entrained.

11. Gravity band filter according to one of claims 1 to 10, characterised in that the endless band comprises a flexible, inextensible, porous filter band of a corrosion-resistant material.

12. Gravity band filter according to claim 11, characterised in that the endless band is of high grade steel, plastics material or an alternative material.

13. Gravity band filter according to claim 11 or 12, characterised in that a deflection roller for the endless band is provided as the drive for the band.

14. Gravity band filter according to claim 13, characterised in that the deflection roller provided for the band drive has a coating which has a greater coefficient of friction than that of the other deflection rollers.

15. Gravity band filter according to one of claims 1 to 14, characterised in that the entraining strips (24) are pivotable about their axes and are provided in particular with a pushing strip (30).

16. Gravity band filter according to claim 15, characterised in that the entraining strips (24) have lateral boundaries (26).

17. Gravity band filter according to claim 15 or 16, characterised in that the entraining strips (24) comprise a backing strip (32).

18. Gravity band filter according to claim 17, characterised in that the backing strip (32) is curved to correspond to the shape of the trough.

19. Gravity band filter according to one of claims 15 to 18, characterised in that the entraining strips, in the region of their axial ends, are each provided with one or two support flaps (34, 36) extending in opposed directions and which are curved to correspond to the shape of the trough.

## Revendications

1. Filtre à bande travaillant par gravité pour la filtration au travers d'une bande filtrante (82) de liquides contenant des particules solides, filtre dans lequel
- une bande sans fin (82) perméable au liquide est entraînée et guidée sur des rouleaux de renvoi (78, 80) et forme avec deux disques latéraux (18, 20) montés avec étanchéité et mobiles en rotation, une chambre de filtration (100) en forme de bac, un support de bande étant prévu,
- le rouleau de renvoi (78) côté entrée est disposé avec l'ensemble de sa section à une certaine hauteur au-dessus des axes des disques latéraux (18, 20),
- il est prévu une arrivée (110, 112 114) de liquide chargé de particules solides dans la chambre de filtration (100), arrivée dont la sortie est décalée par rapport aux axes des disques latéraux (18, 20) dans le sens d'un éloignement par rapport au côté déversement de la bande de filtre (82),
- la sortie de l'arrivée (110, 112, 114) se termine dans la chambre de filtration (100) en forme de bac, à une certaine hauteur au-dessus des axes des disques latéraux (18, 20) et au-dessous du rouleau de renvoi (78) situé côté entrée,
- l'arrivée (110, 112, 114) se termine par un dispositif distributeur (114) agencé sous forme de bac de distribution, lequel dispositif présente une courbure correspondant à la forme de bac et introduit le flux de liquide dans la chambre de filtration sensiblement tangentiellement ou à angle aigu par rapport à la bande de filtre, avec un gradient axial, l'introduction de liquide étant plus forte sur les côtés que dans la zone médiane,
- il est prévu des dispositifs d'entraînement (24) en forme de barrettes qui aident au transport du gâteau de filtration hors de la chambre de filtration en forme de bac, et
- un dispositif récepteur (6) pour la collecte et l'évacuation du filtrat est disposé au-dessous de la chambre de filtration.

2. Filtre à bande travaillant par gravité selon la revendication 1, caractérisé en ce que la sortie du dispositif distributeur (114) répartit le débit de liquide à introduire dans la chambre de filtration (100) sensiblement sur l'ensemble de la largeur du filtre.

3. Filtre à bande travaillant par gravité selon la revendication 1 ou 2, caractérisé en ce que le dispositif distributeur (114) comporte un dispositif de guidage et de déviation du flux de liquide à introduire dans la chambre de filtration (100).

4. Filtre à bande travaillant par gravité selon l'une des revendications 1 à 3, caractérisé en ce qu'un tube d'entrée (112) débouche par le haut dans le dispositif distributeur (114), sensiblement dans la région axialement médiane, face à une plaque (120) inclinée vers le bas et munie de bords latéraux (124, 126), et devant un élément de guidage (142).

5. Filtre à bande travaillant par gravité selon la revendication 3 ou 4, caractérisé en ce que la sortie du dispositif distributeur (114) se termine au voisinage de la bande de filtre (82).

6. Filtre à bande travaillant par gravité selon l'une des revendications 1 à 5, caractérisé en ce qu'un dispositif de trop-plein (52, 54) est prévu dans la chambre de filtration à une certaine distance au-dessus des axes des disques latéraux (18, 20).

7. Filtre à bande travaillant par gravité selon la revendication 6, caractérisé en ce qu'au moins un des axes des disques latéraux (18, 20) est un axe creux (54) et que le dispositif de trop-plein comporte un tube de trop-plein (52) qui débouche dans l'axe creux.

8. Filtre à bande travaillant par gravité selon l'une des revendications 1 à 7, caractérisé en ce qu'une cuve (6) est disposée au-dessous de la chambre de filtration (100) comme dispositif de réception du filtrat.

9. Filtre à bande travaillant par gravité selon l'une des revendications 1 à 8, caractérisé en ce que la bande sans fin (82) est guidée sur un angle allant jusqu'à 200°.

10. Filtre à bande travaillant par gravité selon l'une des revendications 1 à 9, caractérisé en ce que la bande sans fin (82) est prévue en outre en tant que bande-support sur laquelle est appliquée une bande de filtre (92) et qui entraîne celle-ci.

11. Filtre à bande travaillant par gravité selon l'une des revendications 1 à 10, caractérisé en ce que la bande sans fin présente une bande de filtre poreuse, résistante à la traction, flexible, réalisée en un matériau résistant à la corrosion.

12. Filtre à bande travaillant par gravité selon la revendication 11, caractérisé en ce que la bande sans fin est en acier spécial, en matière plastique ou en un matériau autre.

13. Filtre à bande travaillant par gravité selon la revendication 11 ou 12, caractérisé en ce qu'un rouleau de renvoi de la bande sans fin est agencé comme moyen d'entraînement de la bande.

14. Filtre à bande travaillant par gravité selon la revendication 13, caractérisé en ce que le rouleau de renvoi prévu pour l'entraînement de la bande sans fin est muni d'un revêtement dont le coefficient de frottement est supérieur à celui des autres rouleaux de renvoi.

15. Filtre à bande travaillant par gravité selon l'une des revendications 1 à 14, caractérisé en ce que les barrettes d'entraînement (24) peuvent pivoter autour de leur axe et sont pourvues notamment d'un bord poussant (30).

16. Filtre à bande travaillant par gravité selon la revendications 15, caractérisé en ce que les barrettes d'entraînement (24) comportent des délimitations latérales (26).

17. Filtre à bande travaillant par gravité selon la revendication 15 ou 16, caractérisé en ce que les barrettes d'entraînement (24) présentent une surface d'appui (32).

18. Filtre à bande travaillant par gravité selon la revendication 17, caractérisé en ce que la surface d'appui (32) est courbée en accord avec la forme du bac.

19. Filtre à bande travaillant par gravité selon l'une des revendications 15 à 18, caractérisé en ce que les barrettes d'entraînement sont munies, dans la région de leurs extrémités axiales, d'une ou deux pattes d'appui (34, 36) qui s'étendent dans des directions opposées et sont courbées en accord avec la forme du bac.
